# EUROPEAN PATENT SPECIFICATION

(11) **EP 1 703 171 B1**
(45) Date of publication and mention of the grant of the patent: **22.07.2009**
(21) Application number: 06111182.9
(22) Date of filing: 15.03.2006
(51) Int. Cl.: F16H 25/22

(54) **A ball screw**
Kugelgewindetrieb
Ecrou à billes

(30) Priority: 15.03.2005 JP 2005073559
(43) Date of publication of application: 20.09.2006
(73) Proprietor: NTN Corporation, Osaka-shi, Osaka 550-0003 (JP)
(72) Inventor: Kazuno, Keisuke, Shizuoka-ken (JP)
(74) Representative: Cohausz & Florack

(56) References cited:
- EP-A- 0 957 294
- EP-A- 1 375 966
- US-A1- 2002 063 014

## Description

### BACKGROUND OF THE INVENTION

### Field of the Invention

The present invention relates to a ball screw used for an electric-powered actuator of vehicle etc, and more particularly to a ball screw used under agitated oil lubrication, according to the preamble of claim 1.

### Description of Background Art

The ball screw comprises a screw shaft formed with a helical ball rolling groove on its outer circumferential surface, a nut adapted to be fitted on the screw shaft and formed with a helical screw groove on its inner circumferential surface, a large number of balls contained in a rolling passage formed by oppositely arranged screw grooves, and a circulating mechanism for bypassing the rolling passage to a radially outward circumferential passage, and used as a motion converting mechanism e.g. for converting a rotational motion of the nut to.a linear motion of the screw shaft.

In general, there are several kinds of ball screws having different ball circulating mechanism and one of which is a bridge type. In this bridge type ball screw, the nut is fitted with a bridge member having a connecting passage for bypassing balls from their rolling passage on the screw shaft to a radially outward circumferential passage (i.e. the connecting passage formed in the bridge member). This bridge type ball screw is advantageous in its relatively simple and compact structure. Examples of such bridge type ball screws are disclosed in EP 1 375 966 A2 and US 2002/0063014 A1.

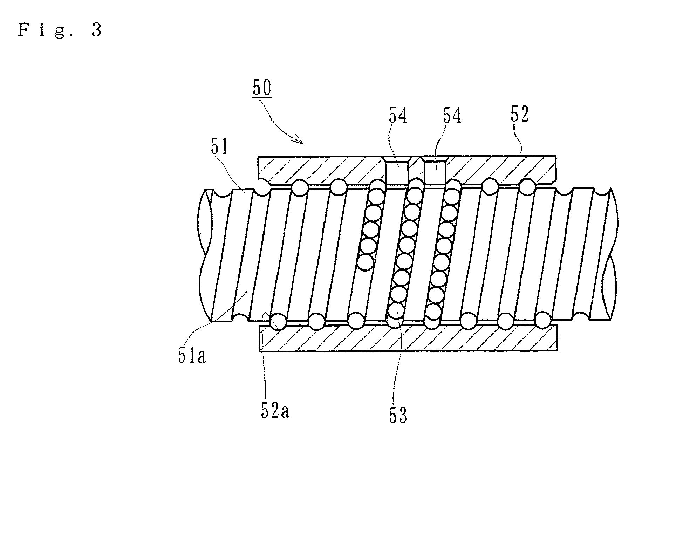

One alternative representative example of this bridge type ball screw is shown in Fig. 3. The ball screw 50 comprises a screw shaft 51 formed with a helical screw groove 51a on its outer circumferential surface; a nut 52 adapted to be fitted on the screw shaft 51 and formed with a helical screw groove 52a on its inner circumferential surface; a large number of balls 53 contained in a rolling passage formed by oppositely arranged screw grooves 51a and 52a; and a bridge member (not shown) formed with a connecting groove for connecting mutually adjacent rolling grooves 52a of the nut 52 by one round. In this conventional ball screw, the nut 52 is formed on its cylindrical wall with two oil introducing apertures 54 communicating with the inside of the nut 52 in an axially spaced manner. Oil introducing portion of each aperture 54 is countersunk enabling oil to be easily introduced. Oil introduced into the inside of the nut 52 through the apertures 54 is discharged at ends of the nut 52 though gap between the nut 52 and the screw shaft 51.

Because of provision of the oil introducing apertures 54 communicating with a space between the screw grooves 51a and 52a, it is possible to supply sufficient oil into the nut 52 although it is a ball screw used under agitated oil lubrication liable to be lack of oil inside the nut 52 due to its short stroke of motion (see Japanese Laid-open Patent Publication No. 108477/2004).

A bridge type ball screw having notches formed in the bridge member so as to intercommunicate the outer and the inner circumferential portions of the ball screw nut is described in the closest prior art document EP 0 957 294 A1. The bridge member has a complicated and filigree configuration to perfectly fit in the bridge window of the ball screw nut.

### Problems to be solved by the Invention

A drawback of the known ball screw having notches to intercommunicate the outer and the inner circumferential portions of the nut is that the bridge members have to be manufactured very accurately in order to perfectly fit into the bridge member and to allow for proper functioning of the ball screw. In addition, the bridge member is manufactured of plastic material by injection moulding to achieve a bridge member which is sufficiently elastically deformable. Due to shrinkage which in general has to be considered by injection moulding of deformable plastic materials the manufacture of a ball screw is very elaborate. This further increases the manufacturing cost of the ball screw.

### SUMMARY OF THE INVENTION

It is, therefore, an object of the present invention to provide a ball screw which can be manufactured at low costs and with superior accuracy to ensure proper functioning.

### Means for achieving the object

For achieving the object of the present invention there is provided, according to the present invention, a ball screw used under agitated oil lubrication comprising: a screw shaft formed with a helical screw groove on its outer circumferential surface; a nut adapted to be fitted on the screw shaft and formed with a helical screw groove on its inner circumferential surface; a plurality of balls contained in a rolling passage formed by oppositely arranged screw grooves; a bridge member adapted to be fitted in a bridge window formed through a barrel wall of the nut and formed with a connecting groove bypassing the rolling passage to a radially outward circumferential passage; and a notch is formed in the bridge member so as to intercommunicate an outer circumferential surface of the nut and the inner circumferential surface of the nut; **characterized in that** the bridge member is made of sintered alloy formed by MIM.

According to the ball screw nut of the present invention, since the notch is formed in the bridge member so as to intercommunicate the outer and inner circumferential portions of the nut, it is unnecessary to specially provide any oil introducing aperture in the nut as a conventional manner. In addition, it is possible to circulate oil without resistance without providing any oil discharging aperture although the ball screw is used in an application in which one open end of the nut is blocked.

According to the present invention, since the bridge member is integrally formed with an arm engaging the screw groove of the nut for positioning the bridge member relative to the nut and with guide walls adapted to be caulked to side edges of the bridge window, it is possible to firmly prevent the bridge member from being radially outwardly fallen out from the bridge window.

According to the present invention, the bridge member is made of sintered alloy formed by MIM, it is possible to easily and exactly form the bridge member to a desired configuration and dimension although it requires high difficulty in work and has a complicated configuration.

According to the present invention, since the guide wall of the bridge member is plastically deformable and has toughness ensuring strength of the caulked portion, and the surface of the connecting groove is hardened at least more than 30 HRC or more by heat treatment, the connecting groove in which large stress is generated has sufficient resistance to impression and wear, and the guide wall has a desirable toughness. Thus, it is possible to prevent generation of clacks in the nut when the bridge member is fitted therein. Accordingly it is possible to provide a bridge type ball screw provided with a bridge member having properties such as strength resistance and toughness which are contrary to each other.

Preferably the bridge member is made of carburized steel and its surface is hardened by carburizing hardening treatment, and the surface hardness of the guide wall is set at a range 15 ∼ 23 HRC by annealing as defined in claim 5. This makes it possible to ensure strength in the caulked portion and to prevent generation of clacks during caulking.

### Effects of the Invention

According to the ball screw of the present invention, it comprises a screw shaft formed with a helical screw groove on its outer circumferential surface; a nut adapted to be fitted on the screw shaft and formed with a helical screw groove on its inner circumferential surface; a plurality of balls contained in a rolling passage formed by oppositely arranged screw grooves; a bridge member adapted to be fitted in a bridge window formed through a barrel wall of the nut and formed with a connecting groove bypassing the rolling passage to a radially outward circumferential passage; and a notch is formed in the bridge member so as to intercommunicate an outer circumferential surface of the nut and the inner circumferential surface of the nut and is **characterized in that** the bridge member (5) is made of sintered alloy formed by MIM. Accordingly, it is unnecessary to specially provide any oil introducing aperture in the nut as a conventional manner. In addition, it is possible to circulate oil without resistance without providing any oil discharging aperture although the ball screw is used in an application in which one open end of the nut is blocked.

### Best mode for carrying out the Invention

Best mode for carrying out the present invention is a ball screw used under agitated oil lubrication comprising: a screw shaft formed with a helical screw groove on its outer circumferential surface; a nut adapted to be fitted on the screw shaft and formed with a helical screw groove on its inner circumferential surface; a plurality of balls contained in a rolling passage formed by oppositely arranged screw grooves; and a bridge member adapted to be fitted in a bridge window formed through a barrel wall of the nut and formed with a connecting groove bypassing the rolling passage to a radially outward circumferential passage; **characterized in that** the bridge member is made of sintered alloy formed by MIM, in that the bridge member is integrally formed with an arm engaging the screw groove of the nut for positioning the bridge member relative to the nut and with guide walls adapted to be caulked to side edges of the bridge window, and in that a notch is formed in the bridge member so as to intercommunicate the outer and inner circumferential portions of the nut.

### BRIEF DESCRIPTION OF THE DRAWINGS

Additional advantages and features of the present invention will become apparent from the subsequent description and the appended claims, taken in conjunction with the accompanying drawings, wherein:
Fig. 1(a) is a plan view of one embodiment of the ball screw of the present invention, and Fig. 1(b) is a longitudinal section view of a ball screw of Fig. 1(a);
Fig. 2(a) is a longitudinal section view of a nut of the present invention, and Fig. 2(b) is s partially broken end view of Fig. 2(a); and
Fig. 3 is a longitudinal section view of a ball screw of the prior art.

### DESCRIPTION OF THE PREFERRED EMBODIMENTS

### Embodiment

Embodiments of the present invention will be described with reference to accompanying drawings.

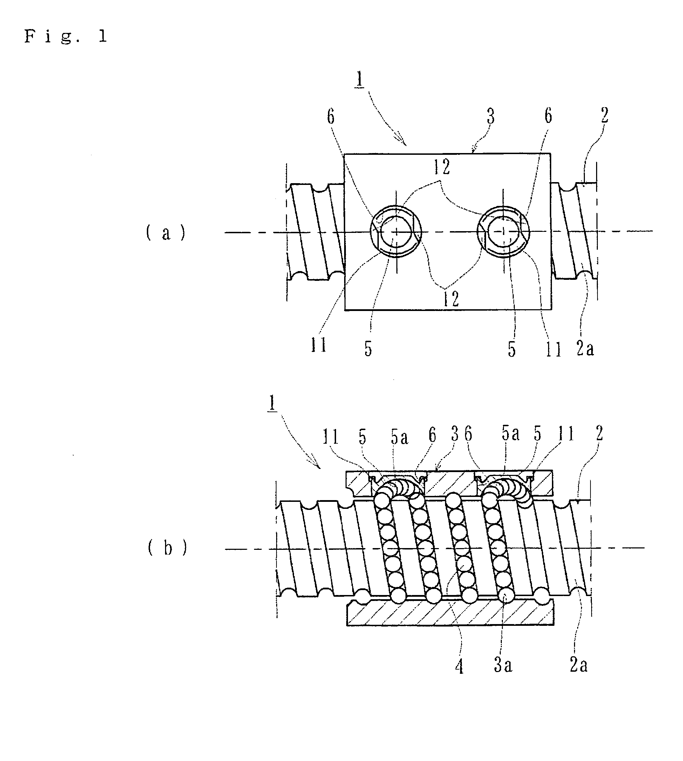

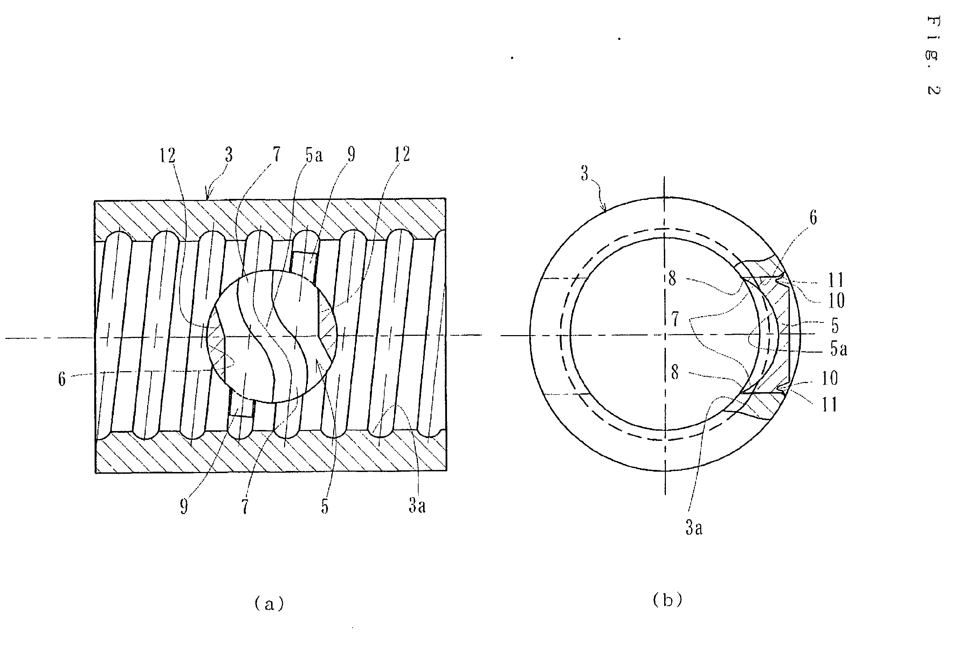

Fig. 1(a) is a plan view of one embodiment of the ball screw of the present invention, and Fig. 1(b) is a longitudinal section view of a ball screw of Fig. 1(a); and Fig. 2(a) is a longitudinal section view of a nut of the present invention, and Fig. 2(b) is s partially broken end view of Fig. 2(a).

The ball screw 1 comprises a screw shaft 2 formed with a helical screw groove 2a on its outer circumferential surface; a nut 3 adapted to be fitted on the screw shaft 2 and formed with a helical screw groove 3a on its inner circumferential surface; a large number of balls 4 contained in a rolling passage formed by oppositely arranged screw grooves 2a and 3a; and a bridge member 5 formed with a connecting groove 5a for connecting mutually adjacent rolling grooves 3a of the nut 3 by one round.

The longitudinal section configuration of each of the screw grooves 2a and 3a may be circular arc or Gothic arc configuration. In this embodiment the Gothic arc configuration is adopted from reasons that a large contacting angle with the ball 4 and a small axial gap can be ensured. This makes it possible to increase rigidity resisting against an axial load and to suppress vibration of the ball screw.

A circular bridge window 6 to which the circular bridge member 5 is fitted is formed in a barrel of the cylindrical nut 3 so that it passes through the wall of the barrel and cuts a portion of the screw groove 3a. A connecting groove 5a for connecting mutually adjacent rolling grooves 3a of the nut 3 by one round is formed in the bridge member 5. This connecting groove 5a and a substantially one round portion of the screw groove 3a forms a rolling passage of the balls 4. A large number of balls 4 contained between the inner and outer screw grooves 2a and 3a forming the rolling passage roll along the screw grooves 2a and 3a, then are guided to the connecting groove 5a of the bridge member 5, climb over the ridge of the screw shaft 1, then return to the adjacent screw groove 3a, and continue to roll along the screw grooves 2a and 3a.

The connecting groove 5a of the bridge member 5 has a "S" configuration as shown in Fig. 2(a) so as to be able to smoothly connect the adjacent screw grooves 3a of the nut 3. Accordingly, the connecting groove 5a is adapted to be connected to the screw groove 3a so that opposite opened edges 7 of the connecting groove 5a correspond to opened edges 8 of the screw groove 3a as shown in Fig. 2(b). The depth of the connecting groove 5a is set so that balls 4 can climb over the ridge of the screw groove 2a of the screw shaft 1 within the connecting groove 5a.

The bridge member 5 is formed with arms 9 each having a substantially semi-cylindrical configuration at either ends of the bridge member 5 as shown in Fig. 2(a). Each arm 9 are adapted to engage the screw groove 3a of the nut 3 via a predetermined radial gap in order to axially position the bridge member 5 relative to the nut 3 and to prevent the bridge member 5 from being radially outwardly fallen out from the bridge window 6. In addition, as shown in Fig. 2(b), the bridge member 5 is formed with recesses 10 on its radially outward surface at circumferentially opposite edges of the bridge member 5 so that a pair of guide walls 11 radially outwardly upstanding from the recesses 10. The bridge member 5 can be secured to the nut 3 by caulking the guide walls 11 to the edges of the bridge window 6.

After having mounted the bridge member 5 in the bridge window 6 from radially inside of the nut 3, the incorporation of the balls 4 is carried out by applying the nut 3 to the end of the screw shaft 1, and by introducing balls 4 one by one into the space between the screw grooves 2a and 3a with rotating the nut 3 to move it along the screw shaft 1. The balls 4 can be also introduced into the rolling passage by using a temporary shaft.

The bridge member 5 is made by injection molding sintered ally obtained by plastically refining metallic powder. For preparation of the injection molding, firstly, plastic and binder comprising wax are mixed and then granulated to pellets from the mixed material. The granulated pellets are fed to a hopper of injection molding machine and injected into a mold under a melted condition to form the sintered alloy by the so-called "MIM" (Metal Injection Molding) method. The sintered alloy formed by MIM can be easily and exactly formed to the bridge member of desired configuration and dimension although the bridge member requires high difficulty in work and has a complicated configuration.

One example of metallic powder used in this embodiment is carburizing hardenable material such as precipitation hardening stainless steel SUS 630 comprising C (0.13 wt%), Ni (0.21 wt%), Cr (1.1 wt%), Cu (0.04 wt%), Mn (0.76 %), Mo (0.19 wt%), Si (0.20 wt%), and Fe (the rest). SUS 630 is able to increase its surface hardness by solution treatment and to obtain strong toughness and high hardness.

When the bridge member 5 is made of carburized material such as SCM 415, it is hardened by carburizing hardening to have its surface hardness 30 - 40 HRC and the caulking portion i.e. guide wall 11 is annealed by an induction tempering apparatus to have its surface hardness 15 - 23 HRC.

When the surface hardness of hardened layer by carburizing hardening is less than 30 HRC, the impression resistance and wear resistance is insufficient, on the contrary, when it exceeds 40 HRC, deformation due to heat treatment of the bridge member 5 is excessive. When the surface hardness of the guide wall 11 by annealing is less than 15 HRC, the strength of the caulking portion is insufficient, on the contrary, when it exceeds 23 HRC, clacks etc. would be caused during caulking.

When the bridge member 5 is made of precipitation hardening stainless steel such as SUS 630, it is preferable to set its surface hardness more than 30 HRC or more by solution treatment. SUS 630 has a characteristic feature that its alloy elements can be easily solubilized by heating the material SUS 630 to a predetermined temperature and then by quenching it.

Since the bridge member 5 is made of these carburized materials or sintered material formed of precipitation hardening stainless steel by MIM, the connecting groove 5a in which a large stress is caused has a sufficiently high impression resistance and wear resistance. In addition, since the toughness of the guide wall 11 forming caulking portion is also sufficiently high, it is possible to prevent generation of clacks etc. when the bridge member 5 is caulked to the nut 3. Although it is shown an example in which the bridge member 5 is made of sintered alloy formed by MIM and caulked to the nut 3, the ball screw of the present invention is not limited to such an example and thus it is possible to use a bridge member made by forging and cutting and adapted to be secured to the bridge window by adhesion.

According to the present invention, a notch 12 (shown by hatching in Fig. 2(a)) is formed in the bridge member 5. Accordingly, when the bridge member 5 is secured in the bridge window 6, the notch 12 intercommunicates the outer and inner circumferential portions of the nut 3 and thus has a function of oil introducing aperture.

In the illustrated embodiment, it is shown a circular bridge member 5 and a corresponding circular bridge window 6, however other configuration e.g. an oval bridge member and a corresponding oval bridge window may be adopted.

According to the present invention, it is unnecessary to specially provide any oil introducing aperture in the nut as a conventional manner. In addition, it is possible to circulate oil without resistance without providing any oil discharging aperture although the ball screw is used in an application in which one open end of the nut is blocked.

### Applicability in industry

The ball screw of the present invention can be applied to a ball screw used under agitated oil lubrication such as an electric-powered actuator of vehicle.

The present invention has been described with reference to the preferred embodiments. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

## Claims

1. A ball screw (1) used under agitated oil lubrication comprising:
a screw shaft (2) formed with a helical screw groove (2a) on its outer circumferential surface;
a nut (3) adapted to be fitted on the screw shaft (2) and formed with a helical screw groove (3a) on its
inner circumferential surface;
a plurality of balls (4) contained in a rolling passage formed by oppositely arranged screw grooves (2a and 3a);
a bridge member (5) adapted to be fitted in a bridge window (6) formed through a barrel wall of the nut (3) and formed with a connecting groove (5a) bypassing the rolling passage to a radially outward circumferential passage;
a notch is formed in the bridge member (5) so as to intercommunicate the outer and inner circumferential portions of the nut (3);
the bridge member (5) is integrally formed with an arm (9) engaging the screw groove (3a) of the nut (3) for positioning the bridge member (5) relative to the nut (3); and
**characterized in that**
the bridge member (5) is integrally formed with guide walls (11) adapted to be caulked to side edges of the bridge window (6);
the guide wall (11) of the bridge member (5) is plastically deformable and has toughness ensuring strength of the caulked portion; and
the surface of the connecting groove (5a) is hardened at least more than 30 HRC by heat treatment.

2. A ball screw of claim 1 wherein the bridge member (5) is made of sintered alloy formed by MIM.

3. A ball screw of claim 1 or 2 wherein the bridge member (5) is made of carburized steel and its surface is hardened by carburizing hardening treatment, and the surface hardness of the guide wall (11) is set at a range 15 ∼ 23 HRC by annealing.

## Patentansprüche

1. Kugelgewindetrieb (1), der unter Schmierung mit bewegtem Öl verwendet wird, umfassend
eine Schneckenwelle (2), die an ihrer äußeren Umfangsfläche mit einer schraubenförmigen Gewindenut (2a) ausgeführt ist;
eine Mutter (3), die dazu geeignet ist, auf die Schneckenwelle (2) aufgesetzt zu werden, und an ihrer inneren Umfangsfläche mit einer schraubenförmigen Gewindenut (3a) ausgeführt ist;
mehrere Kugeln (4), die in einem Rollkanal enthalten sind, der durch die einander gegenüberliegenden Gewindenuten (2a und 3a) gebildet ist;
ein Brückenelement (5), das dazu geeignet ist, in ein Brückenfenster (6), welches durch eine Zylinderwand der Mutter (3) gebildet ist, eingesetzt zu werden, und mit einer Verbindungsnut (5a) ausgeführt ist, die den Rollkanal zu einem radial auswärts befindlichen umfänglichen Kanal umleitet;
wobei im Brückenelement (5) eine Aussparung gebildet ist, um die äußeren und die inneren umfänglichen Abschnitt der Mutter (3) miteinander zu verbinden;
wobei das Brückenelement (5) einstückig mit einem Arm (9) ausgeführt ist, der mit der Gewindenut (3a) der Mutter (3) eingreift, um das Brückenelement (5) in Bezug auf die Mutter (3) zu positionieren; und
**dadurch gekennzeichnet, dass**
das Brückenelement (5) einstückig mit Führungswänden (11) ausgeführt ist, die dazu geeignet sind, mit Seitenrändern des Brückenfensters (6) verstemmt zu werden;
die Führungswand (11) des Brückenelements (5) plastisch verformbar ist und eine Zähigkeit aufweist, die die Stärke des verstemmten Abschnitts sicherstellt; und
die Oberfläche der Verbindungsnut (5a) durch eine Hitzebehandlung auf zumindest mehr als 30 HRC gehärtet ist.

2. Kugelgewindetrieb nach Anspruch 1, wobei das Brückenelement (5) aus einer gesinterten Legierung hergestellt ist, die durch MIM (Metal Injection Molding, Metallpulverspritzguss) gebildet ist.

3. Kugelgewindetrieb nach Anspruch 1 oder 2, wobei das Brückenelement (5) aus einsatzgehärtetem Stahl hergestellt ist und seine Oberfläche durch eine Einsatzhärtungsbehandlung gehärtet ist, und die Oberflächenhärte der Führungswand (11) durch Glühen auf einen Bereich von 15 bis 23 HRC eingerichtet ist.

## Revendications

1. Ecrou à billes (1) utilisé dans des conditions de lubrification avec agitation d'huile, comprenant :
une tige de vis (2) formée avec une gorge de vis hélicoïdale (2a) à sa surface périphérique externe ;
un écrou (3) prévu pour être monté sur la tige de vis (2) et formé avec une gorge de vis hélicoïdale (3a) à sa surface périphérique interne ;
plusieurs billes (4) contenues dans un passage de contact à roulement formé par des gorges de vis opposées (2a et 3a) ;
un organe en pont (5) prévu pour être monté dans un logement de pont (6) formé à travers une paroi cylindrique de l'écrou (3) et formé avec une gorge de liaison (5a) contournant le passage de roulement vers un passage périphérique radialement externe ;
une encoche est formée dans l'organe en pont (5) de façon à faire communiquer les portions périphériques externe et interne de l'écrou (3) ;
l'organe en pont (5) est formé d'dune pièce avec un bras (9) en prise avec la gorge de vis (3a) de l'écrou (3) pour positionner l'organe en pont (5) par rapport à l'écrou (3); et
**caractérisé en ce que**
l'organe en pont (5) est formé d'une pièce avec des parois de guidage (11) prévues pour être matées sur les bords latéraux du logement de pont (6) ;
la paroi de guidage (11) de l'organe en pont (5) est déformable plastiquement et possède une ténacité assurant la résistance de la partie matée ; et
la surface de la gorge de liaison (5a) est durcie jusqu'à plus de 30 HRC par traitement thermique.

2. Ecrou à billes selon la revendication 1, dans lequel l'organe en pont (5) est en alliage fritté formé par MIM (moulage par injection de poudre de métal).

3. Ecrou à vis selon la revendication 1 ou 2, dans lequel l'organe en pont (5) est en acier au carbure, et sa surface est durcie par un traitement de durcissement par carburation, et la dureté de surface de la paroi de guidage (11) est fixée dans un intervalle de 15∼23 HRC par recuit.
